# EUROPEAN PATENT SPECIFICATION

(11) **EP 1 939 962 B1**
(45) Date of publication and mention of the grant of the patent: **18.04.2012**
(21) Application number: 07120017.4
(22) Date of filing: 05.11.2007
(51) Int. Cl.: H01M 6/40, H01M 10/04

(54) **Electricity supply system**
Stromversorgungssystem
Système d'alimentation électrique

(30) Priority: 22.12.2006 CN 200610170005
(43) Date of publication of application: 02.07.2008
(73) Proprietor: Prologium Technology CO., LTD., Wugu Township, Taipei County 248 (TW); Ming Yu Innovations CO., LTD, Taipei City 112 (TW)
(72) Inventor: Yang, Szu-Nan, Taipei City (TW)
(74) Representative: 2K Patentanwälte Blasberg Kewitz & Reichel

(56) References cited:
- EP-A- 1 655 794
- WO-A-93/14612
- US-A1- 2003 152 815
- US-A1- 2004 214 079
- US-A1- 2005 208 383

## Description

### BACKGROUND OF THE INVENTION

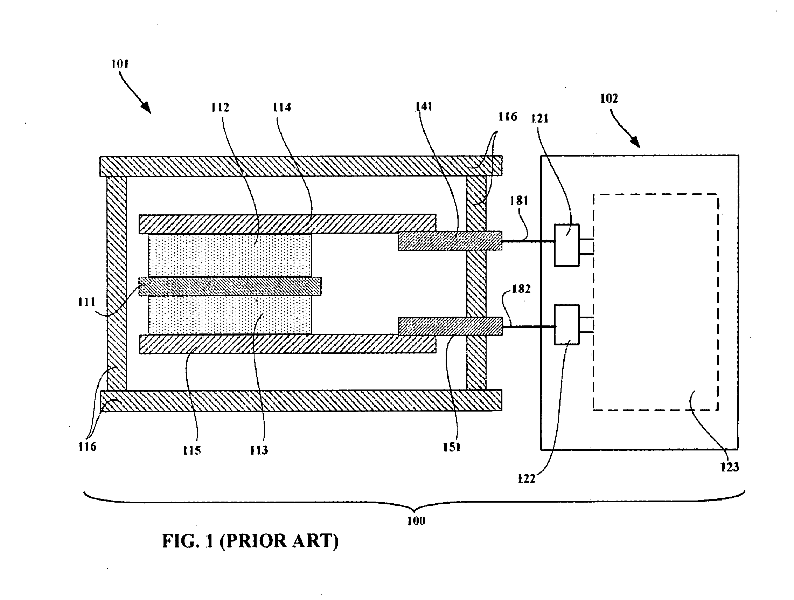

In the electronic device industry, portability is one of the major trends. A portable electronic device typically requires an electricity supply system/module to supply electricity for functional components/modules. Typically, electricity supply modules (e.g., a battery module) and functional modules (e.g., a module including one or more of memory, computing, and display components) are implemented in separate units, as illustrated in the example of Fig. 1.

Fig. 1 illustrates a battery 101 configured to supply electricity for a functional module 102. Battery 101, e.g., a lithium battery, may typically include conversion units 112 and 113 configured to perform conversation between chemical energy and electrical energy. Conversion units 112 and 113 may be separated by separator 111 to prevent short circuit between conversion units 112 and 113.

Battery 101 may further include conductors 114 and 115 configured to collect currents and to form part of an electrical path between conversion units 112 and 113 and functional module 102. Conductors 114 and 113 may be electrically coupled with contacts 121 and 122, respectively, of functional module 102 through tab 141 and tab 151, respectively. Contacts 121 and 122, in turn, may be electrically coupled with circuit 123 that includes various components for performing various functions.

Tab 141 and tab 151 may serve as interfaces between battery 101 and functional module 102 (or a charger for battery 101). Typically, alignment between tabs 141 and 151 and contacts 121 and 122 may be required to ensure reliable electricity supply. Requirements of precise alignment between tabs 141 and 151 and contacts 121 and 122 may incur significant manufacturing costs.

Further, to ensure reliable and stable electricity supply, the relative position between taps 141 and 151 and contacts 121 and 122 may need to be maintained. As a result, the combined electronic device 100 that includes battery 101 and functional module 102 may be unable to be made flexible.

If conductive wires 181-182 are implemented between contacts 121-122 and tabs 141 and 151 to provide flexibility, alignment of more contact points may be required, and manufacturing costs may be increased. Further, conductive wires 181-182 may not be to withstand a large number of a high frequency of bending. Damage to wires 181 -182, e.g., resulted from bending, may cause electronic device 100 to malfunction.

In general, battery 101 may include package 116 for enclosing various components of battery 101, to prevent moisture intake and electrolyte leakage of battery 101. However, tabs 141 and 151 may typically be required to protrude from package 116 to perform interface functions for power supply and recharge. Typically, package 116 may be formed of a material that is different from the material of tabs 141 and 151. Even if sealing means, such as solder, may be applied at the junctions of package 116 and tabs 141 and 151, gaps may still exist at the junctions. Accordingly, package 116 may not be able to effectively prevent electrolyte leakage and moisture intake. As a result, performance of battery 101 may deteriorate. In order to minimize or eliminate the gaps, the manufacturing and/or material of battery 101 may be increased.

As also can be appreciated from the example of Fig. 1, battery 101 and functional module 102 may require different packages. The separate packages also may incur significant manufacturing and material costs.

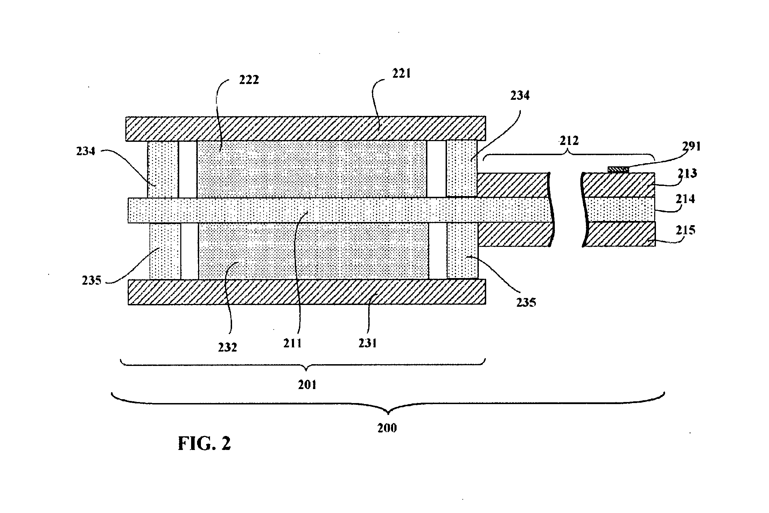

From EP-A-1 655 794 there is disclosed a double-electrode plate with electrical circuitry layer used for a secondary battery. The battery structure described there may be understood to constitute a system for supplying electricity comprising a first conversion unit (first electrode layer 11 of battery structure shown in Fig. 1) configured to perform a first chemical-electrical energy conversion and comprising a first conductor (first substrate of battery structure) electrically coupled with the first conversion unit and representing a first electrode of the system. Further there is disclosed a second conversion unit (second electrode layer 13 of battery structure shown in Fig. 1) configured to perform a second chemical-electrical energy conversion and a second conductor (second substrate of battery structure) electrically coupled with the first conversion unit and representing a second electrode of the system. Moreover there is disclosed a electrical circuitry layer (see element 15 in Fig. 1) disposed between the first electrode layer and the second electrode layer and thus separating both layers. Therefore the electrical circuitry layer may be understood to be a separation portion as such. However, the electrical circuitry layer is used there to comprise printed circuit board PCB (see 151 in Fig. 2 and text [0011]) and at least above one electronic device (153) and is possible to place via holes to possess the outward electrically connecting capability. This means that the electrical circuitry layer is used to as a electrical substrate for electrical connecting.

In US 2004/214079 A1 one or more thin film battery cells are disclosed, the cells are embedded in a multilayer thin film flexible circuit board supporting electrical devices for forming an integrated battery and circuit module. The module can be made using conventional thin film processes. This means that the structure may have a polymeric separator film as being used in ordinary batteries.

In US 2005/208383 A1 an electronic component separator is disclosed for being used e.g. in a lithium ion secondary battery. The electronic component separator comprises a porous base made of substance having a melting point of 180° C or above to provide minimal heat shrinkage even when overheated and to exhibit high reliability and excellent workability.

From WO 93/14612 A there is known a sheet battery used as a substrate for an electronic circuit. By using the sheet battery material as a substrate for electronic circuits the weight and bulk of an ordinary battery as a separate circuit component is eliminated.

US 2003/0152815 A1 discloses microscopic batteries which are integratable with IC (integrated circuits) such as MEMS microcircuits.

### SUMMARY OF THE INVENTION

The present invention relates to a system for supplying electricity to one or more electronic components. At least a first electronic component of the one or more electronic components may be disposed on a circuit substrate. The system includes a first conversion unit configured to perform a first chemical-electrical energy conversion. The system also includes a first conductor electrically coupled with the first conversion unit and representing a first electrode of the system. The system also includes a second conversion unit configured to perform a second chemical-electrical energy conversion. The system also includes a second conductor electrically coupled with the first conversion unit and representing a second electrode of the system. The system also includes a separator portion disposed between the first conversion unit and the second conversion unit and configured to separate the first conversion unit from the second conversion unit. The separator may be a portion of the circuit substrate. The first electrode and the second electrode have different polarities.

The present invention proposes that the separator portion includes through holes with diameters greater than 10 microns and that the the system further comprises a first insulator disposed between the first conversion unit and the separator portion, the first insulator including holes with diameters less than 10 microns; and that the system further comprises a second insulator disposed between the second conversion unit and the separator portion, the second insulator including through holes with diameters less than 10 microns. The separator portion is formed of material including at least one of PI, PET, PEN, glass fiber, and liquid crystal polymer.

The above summary relates to only one of the many embodiments of the invention disclosed herein and is not intended to limit the scope of the invention, which is set forth in the claims herein. These and other features of the present invention will be described in more detail below in the detailed description of the invention and in conjunction with the following figures.

### BRIEF DESCRIPTION OF THE DRAWINGS

The present invention is illustrated by way of example, and not by way of limitation, in the figures of the accompanying drawings and in which like reference numerals refer to similar elements and in which:

Fig. 1 illustrates an example prior-art battery configured to supply electricity for a functional module.

Fig. 2 illustrates an electronic module/device including an electricity supply system and a functional portion in accordance with background prior art.

Fig. 3 illustrates a partial cross-sectional view of an electricity supply in accordance with one or more embodiments of the present invention.

Fig. 4 illustrates a partial cross-sectional view of an electronic device including an electricity supply system in accordance with one or more embodiments of the invention.

### DETAILED DESCRIPTION OF THE INVENTION

The present invention will now be described in detail with reference to a few embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known process steps and/or structures have not been described in detail in order to not unnecessarily obscure the present invention.

One or more embodiments of the invention relate to a system for supplying electricity to one or more electronic components. At least a first electronic component of the one or more electronic components may be disposed on a circuit substrate. The circuit substrate may be a flex circuit board or a rigid circuit board.

The system includes a first conversion unit configured to perform a first chemical-electrical energy conversion. The system also includes a first conductor electrically coupled with the first conversion unit and representing a first electrode of the system. The system also includes a second conversion unit configured to perform a second chemical-electrical energy conversion. The system also includes a second conductor electrically coupled with the conversion unit and representing a second electrode of the system. The first electrode and the second electrode have different polarities.

The system also includes a separator portion disposed between the first conversion unit and the second conversion unit. In the following the separator portion will also referred to a separator (short form). The separator may be formed of material including at least one of polyimide (PI), polyethylene terephthalate (PET), polyethylene naphthalate (PEN), glass fiber, and liquid crystal polymer. The separator may be configured to the first conversion unit from the second conversion unit, thereby preventing a short circuit between the first conversion unit and the second conversion unit or reducing the likelihood thereof. The separator may be a portion of the circuit substrate. The separator may include through holes, for example, having diameters greater than 10 microns, for allowing an ion flow between the first conversion unit and the second conversion unit.

The system may also include a first insulator disposed between the first conversion unit and the separator. The first insulator may include through holes with diameters less than 10 microns. The first insulator may be formed of material including one or more of a polymer material, a stiffener material (e.g., a ceramic material), etc. The polymer may include one or more of poly vinylidene fluoride (PVDF), poly vinylidene fluoride-hexafluoropropylene (PVDF-HFP), poly ethylene oxide (PEO), poly acrylonitrile (PAN), polyimide (PI), etc. The stiffener material may include one or more of SiO₂ TiO₂ Al₂O₃, etc.

The PI may be configured to maintain particles of the stiffener material in place when the first insulator is adhere to the conversion unit, thereby preventing the particles from concentration at the interface between the first insulator and the first conversion unit. The first insulator may include one layer or a plurality of layers. The plurality of layers may have different composition recipes.

The system may further include a second insulator disposed between the second conversion unit and the separator, the second insulator including holes (e.g., through holes) with diameters less than 10 microns. The first and second insulators may be configured to prevent a short circuit between the first conversion unit and the second conversion unit or reduce the likelihood thereof. The first and second insulators may be configured to allow an ion flew between the first conversion unit and the second conversion unit.

The system may also include a packaging unit configured to surround the first conversion unit. The packaging unit may be electrically coupled with the first conductor and a conductive element disposed on the circuit substrate.

The system may also include an inert unit disposed between the first conversion unit and the packaging unit. The inert unit may be electrically non-conductive and inert to the first conversion unit. For example, the inert unit may include an oxidized unit and/or a metal unit with polymer coating.

The system may also include a supporting structure configured to maintain separation between the first conductor and the second conductor and/or a conductive element disposed on the circuit substrate. The conductive element and the supporting structure may be disposed on different sides of the circuit substrate.

The system may further include a polymer unit covering the first conductor. The polymer may span beyond the supporting structure. The polymer unit includes one or more via holes. One or more inside walls of the one or more via holes are coated with conductive material. A second electronic component of the one or more electronic components may overlap at least one of the first conductor and the second conductor. For example, the second electronic component may be disposed on the polymer unit and electrically coupled with the first conductor by the conductive material.

One or more embodiments of the invention relate to an electrical module that includes the electricity supply system or a variation of the electricity supply system.

One or more embodiments of the invention relate to an electronic device that includes the electricity supply system or a variation of the electricity supply system.

The features and advantages of the present invention may be better understood with reference to the figure and discussions that follow.

Fig. 2 illustrates as background art an electronic module/device 200 (electronic device 200) including an electricity supply system 201 and a functional portion 212 in accordance with one or more embodiments of the present invention. Electricity supply system 201 may include a first conversion unit 222 and a second conversion unit 232 configured to perform chemical-electrical energy conversions.

Electricity supply system 201 may also include a separator portion 211 disposed between first conversion unit 222 and second conversion unit 232 and configured to separate first conversion unit 222 from second conversion unit 232. Separator portion 211 may represent a portion of a circuit substrate 214 of electronic device 200.

Electricity supply system 201 may further include first conductor 221 electrically coupled with first conversion unit 222 to perform one or more functions, such as current collection. Similarly, electricity supply system 201 may also include second conductor 231 electrically coupled with second conversion unit for performing current collection, etc.

Electricity supply system 201 may further include first packaging unit 234 configured to surround first conversion unit 222 and to prevent electrolyte leakage and/or moisture intake for conversion unit 222. First packaging unit 234 may also be configured to form part of an electrical path between first conductor 221 and first conductive element 213 on functional portion 212 on circuit substrate 214. Through first conductor 222, first packaging unit 234, and first conductive element 213, electronic component 291 on circuit substrate 214 may be able to receive electricity supply from electricity supply system 201.

First conductive element 213 may have a single layer or multilayer structure, and may be formed of material including one or more of copper, aluminum, nickel, etc., and one or more alloys thereof. Circuit substrate 214 also may have a single layer or multilayer structure. Circuit substrate 214 may include one or more structures formed of materials including one or more of PI, PET, PEN, glass fiber, liquid crystal polymer, epoxy, acrylic acid reagent, etc. Functional portion 212 may include logic circuitry and components. The logic circuitry may include wires/traces electrically coupled with electricity supply system 201 through first conductive element 213 or second conductive element 215.

Electronic device 200 may also include a second conductor 231, a second packaging unit 235, and a second conductive element 215 having configurations and functions similar to those of corresponding counterparts, such as first conductor 221, first packaging unit 234, and first conductive element 213.

Electricity supply system 201 and functional portion 212 may form an integrated part of electronic device 200 with reliable electrical coupling. If packaging is required, only one packaging unit may be required for the integrated part. Advantageously, manufacturing and material costs may be reduced.

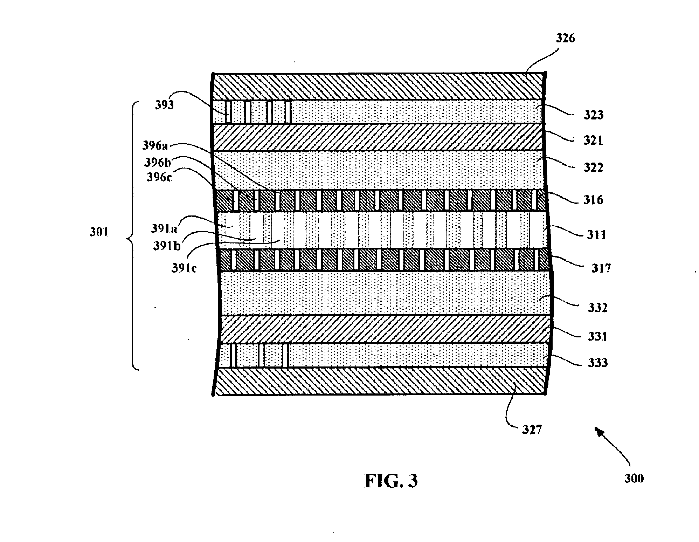

Fig. 3 illustrates a partial cross-sectional view of an electricity supply 301 in accordance with one or more embodiments of the present invention. Electricity supply system 301 may be part of electronic device 300. Electricity supply system 301 may include conversion units 322 and 332. Each of conversion units 322 and 332 may include active material (e g., ceramic material), polymer binder, and conductive material.

Electricity supply system 301 may a separator portion 311 disposed between conversion units 322 and 332. Separator portion 311 may represent a portion of a circuit of an electronic module/device. Separator portion 311 may include a plurality of through holes, e.g., through holes 391a to 391c, configured to allow ion migration (or ion flow) between conversion units 322 and 332.

Each of through holes 391a to 391c may have a diameter (a dimension) greater than 10 microns, for example, between 20 microns and 500 microns. Through holes 391a to 391c may be formed utilizing one or more well-known techniques/tools, such as one or more of etching, laser penetration, erosion, punching, drilling, etc., for example, after conductive layers (similar to conductive elements 213 and 215 shown in the example of Fig. 2) on the circuit substrate has been removed. With the relatively large sizes of through holes 391a to 391c, flexibility of separator portion 311 and, accordingly, the flexibility of electricity supply system 301, may be improved.

Electricity supply system 301 may also include a first insulator 316 disposed between separator portion 311 and conversion unit 322. Formed of porous material, first insulator 316 may include a plurality of through holes, e.g., through holes 396a to 396c, configured to allow ion flow between conversion units 322 and 332. Each of through holes 396a to 396c may have a diameter (a dimension) that is less than 10 microns. The small size of each of through holes 396a to 396c reduce the flow rate of ions, thereby preventing a short circuit between conversion units 322 and 332, while allowing ion migration for electricity supply and recharge of electricity supply system 301. Further, aging of conversion units 322 and 332 caused by local overload of the conversion units may be mitigated or prevented, given the ion migration.

First insulator 316 may be formed of material including one or more of polymer material, stiffener material, etc. For example, the polymer material may include one or more of poly vinylidene fluoride (PVDF), poly vinylidene fluoride-hexafluoropropylene (PVDF-HFP), poly ethylene oxide (PEO), poly aerylonitrile (PAN), polyimide (PI), etc. The stiffener material may include one or more of SiO₂, TiO₂, Al₂O₃, etc. The stiffener material may be configured to improve ion conductivity of first insulator 316 and to impregnate electrolytes. One or more surfaces of first insulator 316 may be hydrophobicized.

First insulator 316 may be chemically adhered to conversion unit 322 utilizing one or more of gel electrolyte, plasticizer, etc. though hot lamination. During the adhesion/lamination process, polymer segments, chains, or event backbones of conversion unit 322 and first insulator 316 may be softened to migrate or rotate. PI in first insulator 316 and/or conversion unit 322 may maintain stiffener material in place, such that the particles may not concentrate at the interface between conversion unit 322 and first insulator 316. Advantageously, flexibility at the interface may be maintained, and electricity supply system 301 may be bent without first insulator 316 being detached from conversion unit 322. According, electricity supply system 301 may be mechanically and structurally flexible with optimal performance and durability.

In one or more embodiments, a polymer material may represent about 60% to about 95% of the volume of first insulator 316, and a stiffener material may represent about 5% to about 40% of the volume of first insulator 316. The polymer material may include PVDF, PVDF-HFP, PEO, and/or PAN. A solution may be formed including the polymer material, the stiffener material, and a solvent (e.g., NMP or Acetone). A non-solvent (e.g., PC or Propanol) with weight of about 0.5 to 3.0 times the weight of the polymer material may be added to the solution to produce a new solution. Solid content may represent about 5% to about 30% of the new solution, and the solvent may represent about 95% to about 70% of the new solution. First insulator 316 (and second insulator 317) may be formed on separator portion 311 utilizing the new solution through coating, dipping, and/or spraying with (subsequent) removal of the solvent and non-solvent.

In one or more embodiments, a polymer material may represent about 25% to about 40% of the volume of first insulator 316, and a stiffener material may represent about 75% to about 95% of the volume of first insulator 316. The polymer material may include PVDF and/or PVDF-HFP. A solution may be formed including the polymer material, the stiffener material, a solvent, and a non-solvent. Solid content may represent about 15% to about 45% of the solution, and the solvent may represent about 85% to about 55% of the solution. First insulator 316 (and second insulator 317) may be formed on separator portion 311 utilizing the solution through coating, dipping, and/or spraying with (subsequent) removal of the solvent and non-solvent.

In one or more embodiments, a polymer material may represent about 5% to about 25% of the volume of a first layer of first insulator 316, and a stiffener material may represent about 75% to about 95% of the volume of the first layer of first insulator 316. The polymer material may include PVDF and/or PVDF-HFP. A first solution may be formed including the polymer material, the stiffener material, a solvent, and a non-solvent. Solid content may represent about 15% to about 45% of the first solution, and the solvent may represent about 85% to about 55% of the first solution. The first layer of first insulator 316 (and a first layer of second insulator 317) may be formed on separator portion 311 utilizing the first solution through coating, dipping, and/or spraying with (subsequent) removal of the solvent and non-solvent.

Subsequently, a second layer of first insulator 316 may be formed over the first layer of first insulator 317. A polymer material may represent about 60% to about 95% of the volume of the second layer of first insulator 316, and a stiffener material may represent about 5% to about 40% of the volume of the second layer of first insulator 316. The polymer material may include PVDF, PVDF-HFP, PEO, and/or PAN. A second solution may be formed including the polymer material, the stiffener material, a solvent, and a non-solvent. Solid content may represent about 15% to about 45% of the first solution, and the solvent may represent about 85% to about 55% of the second solution. The second layer of first insulator 316 (and a second layer of second insulator 317) may be formed on the first layer of first insulator 316 (and the first layer of second insulator 317) utilizing the second solution through coaling, dipping, and/or spraying with (subsequent) removal of the solvent and non-solvent.

Electricity supply system 301 may also include a first conductor 321 electrically coupled with conversion unit 322 and configured to serve as an electrode of electricity supply system 301. First conductor 221 may be formed of material including one or more of copper, aluminum, nickel, tin, silver, gold, etc., and one or more of alloys thereof. First conductor 221 may be configured to transfer electrical charge between first conversation unit 222 and first packaging unit 234 and/or other conductive structures (e.g., conductive wires) for electrical coupling with an external circuitry for electricity supply or recharge. First conductor 221 may also be configured to prevent moisture intake and electrolyte leakage for electricity supply system 201.

Electricity supply system 301 may also include a first polymer unit 323 configured to cover first conductor 321, thereby protecting first conductor 321 and improving flexibility of first conductor 321. First polymer unit 323 may be formed of material including one or more of polyimide (PI), polyethylene terephthalate (PET), polyethylene naphthalate (PEN), Polystyrene (PS), polypropylene (PP), polyvinyl chloride (PVC). epoxy, acrylic acid reagent, etc.

First polymer unit 323 may be implemented on first conductor 321 through hot lamination with alignment. Alternatively or additionally, solder mask may be printed onto first conductor 321 through screen printing. Once the solder mask has cured or substantially cured, first polymer unit 323 may be attached onto first conductor 321.

First polymer unit 323 may include one or more via holes, such as via hole 393. The inside wall of via hole 393 may be coated or plated with a conductive material. Accordingly, a first electronic component 326 disposed on first polymer unit 323 may be electrically coupled with first conductor 321 through the conductive material in via hole 393 to receive electricity from electricity supply system 301.

In one or more embodiments, first polymer unit 323 may be formed of conductive polymer or polymer with conductive particles. Accordingly, there may be no need to implement via holes.

First electronic component 326 may include an antenna, a simple circuit, and an RF 1C, for example, in an active RFID application. Alternatively or electronic component 326 may include a flexible display, such as an OLED. Alternatively or additionally, first electronic component 326 may also represent a circuit layout layer configured to accommodate one or more electronic components.

First electronic component 326 may overlap with one or more of first conductor 321 and second conductor 331. With electrical conductivity provided by conductive via holes or conductive first polymer unit 323 in a substantial, overlapped area, reliability of electrical coupling may be advantageously optimized. Further, packaging costs and foam factors of associated end products may be reduced.

Electricity supply system 301 may also include a second insulator 317, a second conductor 331, and a second polymer unit 331 having configurations and functions similar to those of corresponding counterparts such as first insulator 316, first conductor 321, and first polymer unit 323. In one or more embodiments, first conductor 321 may represent a cathode of electricity supply system 301, and second conductor 331 may represent an anode of electricity supply system 301. An electronic component 327 also may be attached to second polymer unit 333 for receiving electricity from electricity supply system 301.

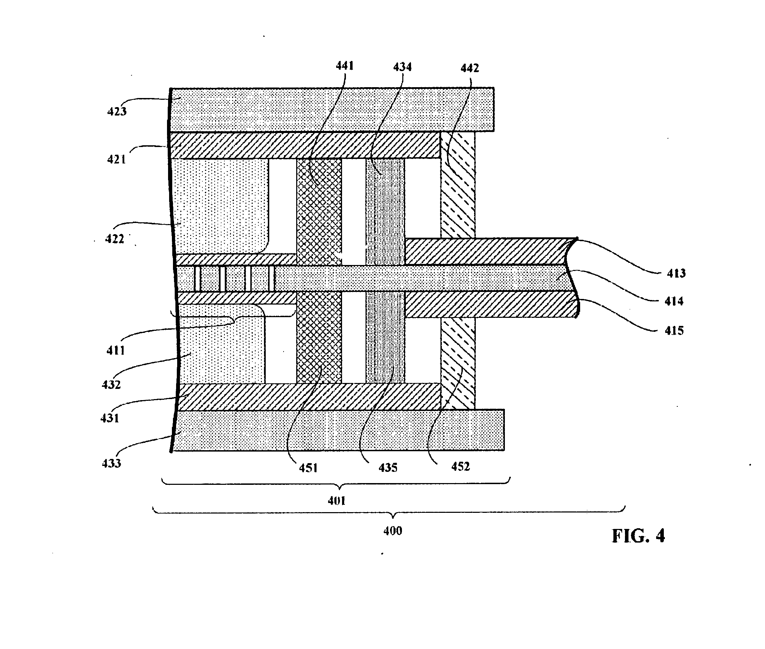

Fig. 4 illustrates a partial cross-sectional view of an electronic device 400 including an electricity supply system 401 in accordance with one or more embodiments of the present invention. Electricity supply system 401 may include conversion units 422 and 432, separator portion 411 of circuit substrate 414, conductors 421 and 431, and polymer units 423 and 433, which have configurations and functions similar to those of conversion units 322 and 332, separator portion 311, conductors 321 and 331, and polymer units 323 and 333, respectively, discussed in the example of Fig. 3.

Electricity supply system 401 may also include a first packaging unit 434 configured to enclose first conversion unit 422 to prevent electrolyte leakage and moisture intake. First packaging unit 434 may also be configured to conduct electricity between first conductor 421 and first conductive element 413 disposed on circuit substrate 414. Further, first packaging unit 434 may also be configured to structurally and mechanically coupled with first conductor 421 and circuit substrate 414 to promote distribution of stress, thereby enhancing structural robustness and flexibility of electricity supply system 401 and/or associated electronic device 400.

First packaging unit 434 may be formed of material including one or more of glue (e.g., with conductive particles), metal, fiberglass, etc. and one or more of combinations thereof. The glue may include one or more of PI, epoxy, acrylic acid reagent, etc.

In one or more embodiments, first conductor 421, first packaging unit 434, first conductive element 413 may represent a manufactured pattern (for example, e.g., etched or micro/nano-machined pattern), of a single piece of a conductive material. Advantageously reliability of electrical coupling may be ensured. Alternatively or additionally, packaging unit 434 may be disposed between first conductor 421 and circuit substrate 414 through aligned adhesion and/or screen printing.

First packaging unit 434 may include a plurality of subunits. The subunits may have an offset arrangement or a stacking arrangement, for improving conductivity, adhesion, flexibility, and/or moisture-leakage resistance.

Electricity supply system 401 may also include a first support structure 442 disposed between first polymer unit 423 and first conductive element 413. First support structure 442 may be configured to maintain a space between first conductor 421 and at least one of second conductive element 415 and second conductor 431 to prevent a short circuit, for example, during manufacturing or use of electronic device 400, when the deformation of a portion of one or more of first conductor 421, second conductor 431 and second conductive element 415 may occur.

Electricity supply system 401 may also include first inert unit 441 disposed between first conversion unit 422 and packaging unit 434. First inert unit 441 may be chemically inert to both first conversion unit 422 and first packaging unit 434. Further, first inert unit 441 may be electrically non-conductive. First inert unit 341 may be formed of a material that includes one or more of glue, metal, electrical-chemical inert material, etc., or a combination thereof. If first inert unit 441 is formed of a metal material, the surface of first inert unit 441 may be inertized, such as oxidized and/or coated with polymer. First inert unit 441 may provide an additional layer (in addition to packaging unit 434) for preventing contamination and electrolyte leakage of first conversion unit 422. Advantageously, durability and performance of electricity supply system 401 may be ensured.

Electricity supply system 401 may also include a second packaging unit 435, a second support structure 452, and a second inert unit 451 having configurations and functions similar to those of corresponding counterparts, first packaging unit 434, first support structure 442, and first inert unit 441, respectively.

As can be appreciated from the foregoing, embodiments of the present invention may improve efficiency in manufacturing electronic devices. In general, a circuit substrate can withstand high temperatures, such as a temperature higher than 300°C. Therefore, one or more mass production techniques, such as tin reflow, surface mount technology (SMT), etc. may be utilized to integrate electricity supply systems on circuit substrates (or circuit boards). For example, in one or more embodiments, electricity supply systems may represent SMT components that may be installed during the same SMT process for installing functional components. With the number of processes reduced, efficiency may be improved, and manufacturing costs of electronic devices may be reduced.

Further, with the integration of electricity supply systems and functional modules, manufacturing and material costs for providing packaging and electrical coupling may be reduced. Foam factors of electronic devices also may be reduced.

Since electricity supply components may be deployed on a circuit substrate with substantial maneuverability, embodiments of the invention may also provide more possibilities for electronic component layout. Accordingly, flexibility and variety of electronic device design may be provided.

Embodiments of the invention also provide improved structural/mechanical flexibility of electricity supply systems and/or electronic devices.

While this invention has been described in terms of several embodiments, there are alterations, permutations, and equivalents, which fall within the scope of this invention. It should also be noted that there are many alternative ways of implementing the methods and apparatuses of the present invention. Furthermore, embodiments of the present invention may find utility in other applications.

## Claims

1. A system for supplying electricity (301) comprising:
a first conversion unit (322) configured to perform a first chemical-electrical energy conversion;
a first conductor (321) electrically coupled with the first conversion unit and representing a first electrode of the system;
a second conversion unit (332) configured to perform a second chemical-electrical energy conversion;
a second conductor (331) electrically coupled with the first conversion unit and representing a second electrode of the system; and
a circuit substrate (314) including:
a separator portion (311) disposed between the first conversion unit and the second conversion unit and configured to separate the first conversion unit from the second conversion unit, and
a functional portion (312) including logic circuitry and components,
wherein the first electrode and the second electrode have different polarities; **characterized in that** the separator portion (311) includes through holes (391a/b/c) with diameters greater than 10 microns;
the system further comprising a first insulator (316) disposed between the first conversion unit and the separator portion, the first insulator including holes with diameters less than 10 microns; and
the system further comprising a second insulator (317) disposed between the second conversion unit and the separator portion, the second insulator including through holes with diameters less than 10 microns;
wherein the separator portion (311) is formed of material including at least one of PI, PET, PEN, glass fiber, and liquid crystal polymer.

2. The system of claim 1 wherein a second electronic component of the one or more electronic components overlaps at least one of the first conductor and the second conductor.

3. The system of claim 1 wherein the first insulator (316) includes a plurality of layers with different composition recipes.

4. The system of claim 1 wherein the first insulator (316) is formed of material including one or more of a polymer material and a ceramic material.

5. The system of claim 4 wherein the polymer material includes one or more of PVDF, PFDF-HFP, and PI.

6. The system of claim 1 further comprising a packaging unit (234) configured to surround the first conversion unit, the packaging unit electrically coupled with the first conductor and a conductive element disposed on the circuit substrate.

7. The system of claim 6 further comprising an inert unit (441) disposed between the first conversion unit and the packaging unit, the inert unit being electrically non-conductive and inert to the first conversion unit.

8. The system of claim 7 wherein the inert unit (441) includes at least one of an oxidized metal unit and a coated metal unit.

9. The system of claim 1 further comprising a polymer unit (323) covering the first conductor.

10. The system of claim 9 wherein the polymer unit (323) includes one or more via holes, and one or more inside walls of the one or more via holes are coated with conductive material.

11. The system of claim 1 wherein the circuit substrate is a flex circuit board.

12. An electronic device (300) comprising:
a first conversion unit (322) configured to perform a first chemical-electrical energy conversion;
a first conductor (321) electrically coupled with the first conversion unit;
a second conversion unit (332) configured to perform a second chemical-electrical energy conversion;
a second conductor (331) electrically coupled with the second conversion unit; and
a circuit substrate (314) including a separator portion (311) and a functional portion, the separator portion disposed between the first conversion unit and the second conversion unit and configured to separate the first conversion unit and the second conversion unit; the functional portion including logic circuitry and components; and
wherein the logic circuitry and components disposed on the circuit substrate and configured to consume electrical energy supplied by at least one of the first conversion unit and the second conversion unit,
wherein the first conductor and the second conductor have different polarities; wherein the separator portion (311) includes through holes (391a/b/c) with diameters greater than 10 microns;
the system further comprising a first insulator (316) disposed between the first conversion unit and the separator portion, the first insulator including holes with diameters less than 10 microns; and
the device further comprising a second insulator (317) disposed between the second conversion unit and the separator portion, the second insulator including through holes with diameters less than 10 microns;
wherein the separator portion (311) is formed of material including at least one of PI, PET, PEN, glass fiber, and liquid crystal polymer.

13. The electronic device of claim 12 wherein a second electronic component overlaps at least one of the first conductor (321) and the second conductor (331), the second electronic component receiving electricity from the at least one of the first conductor and the second conductor.

14. The electronic device of claim 12 further comprising a packaging unit (234) configured to surround the first conversion unit, the packaging unit electrically coupled with the first conductor and a conductive element disposed on the circuit substrate.

15. The electronic device of claim 14 further comprising an inert unit (441) disposed between the first conversion unit and the packaging unit, the inert unit being electrically non-conductive and inert to the first conversion unit.

16. The electronic device of claim 12 further comprising a polymer unit covering the first conductor, wherein the polymer unit includes one or more via holes, and one or more inside walls of the one or more via holes are coated with conductive material.

## Patentansprüche

1. System zur Strom-Versorgung (301) umfassend:
eine erste Umwandlungs-Einheit (322), die eingerichtet ist, eine erste chemisch-elektrische Energie-Umwandlung durehzuführen;
einen ersten Leiter (321), der elektrisch mit der ersten Umwandlungs-Einheit verbunden ist und der eine erste Elektrode des Systems darstellt;
eine zweite Umwandlungs-Einheit (332), die eingerichtet ist, eine zweite chemisch-elektrische Energie-Umwandlung durchzuführen;
einen zweiten Leiter (331), der elektrisch mit der zweiten Umwandlungs-Einheit verbunden ist und der eine zweite Elektrode des Systems darstellt; und
ein Schaltungs-Substrat (314) aufweisend:
einen Trenn-Abschnitt (311), der zwischen der ersten Umwandlungs-Einheit und der zweiten Umwandlungs-Einheit angeordnet ist und der eingerichtet ist, die erste Umwandlungs-Einheit von der zweiten Umwandlungs-Einheit zu trennen, und
einen Funktions-Abschnitt (312) mit einem logischen Schaltkreis und mit Bauteilen,
wobei die erste Elektrode und die zweite Elektrode unterschiedliche Polaritäten aufweisen; **dadurch gekennzeichnet, dass**
der Trenn-Abschnitt (311) Durchgangs-Löcher (391a/b/c) mit Durchmessern größer 10 Mikrometer aufweist;
das System ferner einen ersten Isolator (316) aufweist, der zwischen der ersten Umwandlungs-Einheit und dem Trenn-Abschnitt angeordnet ist, wobei der erste Isolator Löcher mit Durchmessern kleiner 10 Mikrometer aufweist; und
das System ferner einen zweiten Isolator (317) aufweist, der zwischen der zweiten Umwandlungs-Einheit und dem Trenn-Abschnitt angeordnet ist, wobei der zweite Isolator Durchgangs-Löcher mit Durchmessern kleiner 10 Mikrometer aufweist;
wobei der Trenn-Abschnitt (311) aus Material gebildet ist, das mindestens eines von PI, PET, PEN, Glasfaser und Flüssigkristall-Polymer aufweist.

2. System nach Anspruch 1, wobei ein zweites elektronisches Bauteil des einen oder der mehreren elektronischen Bauteile zumindest einen des ersten Leiters und des zweiten Leiters überlappt.

3. System nach Anspruch 1, wobei der erste Isolator (316) eine Vielzahl von Schichten mit verschiedenen Zusammensetzungs-Rezepturen aufweist.

4. System nach Anspruch 1, wobei der erste Isolator (316) aus Material gebildet ist, das einen oder mehrere Polymer-Materialien und ein Keramik-Material umfasst.

5. System nach Anspruch 4, wobei das Polymer-Material eines oder mehrere von PVDF, PFDF-HFP und PI aufweist.

6. System nach Anspruch 1 ferner aufweisend eine Verpackungs-Einheit (234), die eingerichtet ist, die erste Umwandlungs-Einheit zu umgeben, wobei die Verpackungs-Einheit elektrisch mit dem ersten Leiter und einem leitenden Element verbunden ist, das auf dem Schaltungs-Substrat angeordnet ist.

7. System nach Anspruch 6 ferner aufweisend eine inerte Einheit (441), die zwischen der ersten Umwandlungs-Einheit und der Verpackungseinheit angeordnet ist, wobei die inerte Einheit sich elektrisch nicht-leitend und inert zu der ersten Umwandlungs-Einheit verhält.

8. System nach Anspruch 7, wobei die inerte Einheit (441) mindestens eine von einer oxidierten Metall-Einheit und einer beschichteten Metall-Einheit aufweist.

9. System nach Anspruch 1 ferner aufweisend eine Polymer-Einheit (323), die den ersten Leiter bedeckt.

10. System nach Anspruch 9, wobei die Polymer-Einheit (323) ein oder mehrere Durchgangs-Löcher umfasst, und wobei ein oder mehrere Innenwandungen des einen oder der mehreren Durchgangs-Löcher mit leitendem Material beschichtet ist.

11. System nach Anspruch 1, wobei das Schaltungs-Substrat eine Flex-Leiterplatte ist.

12. Elektronisches Gerät (300) umfassend:
eine erste Umwandlungs-Einheit (322), die eingerichtet ist, eine erste chemisch-elektrische Energie-Umwandlung durchzuführen;
einen ersten Leiter (321), der elektrisch mit der ersten Umwandlungs-Einheit verbunden ist;
eine zweite Umwandlungs-Einheit (332), die eingerichtet ist, eine zweite chemisch-elektrische Energie-Umwandlung durchzuführen;
einen zweiten Leiter (331), der elektrisch mit der zweiten Umwandlungs-Einheit verbunden ist; und
ein Schaltungs-Substrat (314) aufweisend einen Trenn-Abschnitt (311) und einen Funktions-Abschnitt, wobei der Trenn-Abschnitt zwischen der ersten Umwandlungs-Einheit und der zweiten Umwandlungs-Einheit angeordnet ist und eingerichtet ist, die erste Umwandlungs-Einheit von der zweiten Umwandlungs-Einheit zu trennen; wobei der Funktions-Abschnitt einen logischen Schaltkreis und Bauteile aufweist; und
wobei der logische Schaltkreis und die Bauteile auf dem Schaltungs-Substrat angeordnet sind und eingerichtet sind, elektrische Energie zu verbrauchen, die zumindest von einer der ersten Umwandlungs-Einheit und der zweiten Umwandlungs-Einheit bereit gestellt wird,
wobei der erste Leiter und der zweite Leiter unterschiedliche Polaritäten aufweisen;
wobei der Trenn-Abschnitt (311) Durchgangs-Löcher (391a/b/c) mit Durchmessern größer 10 Mikrometer aufweist;
das Gerät ferner einen ersten Isolator (316) aufweist, der zwischen der ersten Umwandlungs-Einheit und dem Trenn-Abschnitt angeordnet ist, wobei der erste Isolator Löcher mit Durchmessern kleiner 10 Mikrometer aufweist; und
das Gerät ferner einen zweiten Isolator (317) aufweist, der zwischen der zweiten Umwandlungs-Einheit und dem Trenn-Abschnitt angeordnet ist, wobei der zweite Isolator Durchgangs-Löcher mit Durchmessern kleiner 10 Mikrometer aufweist;
wobei der Trenn-Abschnitt (311) aus Material gebildet ist, das mindestens eines von PI, PET, PEN, Glasfaser und Flüssigkristall-Polymer aufweist.

13. Elektronisches Gerät nach Anspruch 12, wobei ein zweites elektronisches Bauteil des einen oder der mehreren elektronischen Bauteile zumindest einen des ersten Leiters (321) und des zweiten Leiters (331) überlappt, wobei das zweite elektronische Bauteil elektrische Energie von zumindest einer der ersten Umwandlungs-Einheit und der zweiten Umwandlungs-Einheit empfängt.

14. Elektronisches Gerät nach Anspruch 12 ferner aufweisend eine Verpackungs-Einheit (234), die eingerichtet ist, die erste Umwandlungs-Einheit zu umgeben, wobei die Verpackungs-Einheit elektrisch mit dem ersten Leiter und einem leitenden Element verbunden ist, das auf dem Schaltungs-Substrat angeordnet ist.

15. Elektronisches Gerät nach Anspruch 14 ferner aufweisend eine inerte Einheit (441), die zwischen der ersten Umwandlungs-Einheit und der Verpackungseinheit angeordnet ist, wobei die inerte Einheit sich elektrisch nicht-leitend und inert zu der ersten Umwandlungs-Einheit verhält.

16. Elektronisches Gerät nach Anspruch 12 ferner aufweisend eine Polymer-Einheit (323), die den ersten Leiter bedeckt, wobei die Polymer-Einheit ein oder mehrere Durchgangs-Löcher umfasst, und wobei ein oder mehrere Innenwandungen des einen oder der mehreren Durchgangs-Löcher mit leitendem Material beschichtet ist.

## Revendications

1. Un système d'alimentation électrique (301) comprenant:
une première unité de conversion (322) configurée pour mettre en oeuvre une première conversion énergétique chimico-électrique;
un premier conducteur (321) électriquement couplé à la première unité de conversion électrique et représentant une première électrode du système;
une seconde unité de conversion (332) configurée pour mettre en oeuvre une seconde conversion énergétique chimico-électrique;
un second conducteur (331) électriquement couplé à la première unité de conversion électrique et représentant une seconde électrode du système; et
un substrat de circuit (314) comprenant:
une partie séparatrice (311) disposée entre la première unité de conversion et la seconde unité de conversion et configurée pour séparer la première unité de conversion de la seconde unité de conversion, et
une partie fonctionnelle (312) incluant des circuits logiques et des composants;
dans laquelle la première électrode et la seconde électrode présentent des polarités différentes; **caractérisée en ce que** la partie séparatrice (311) comporte des orifices (391a/b/c) ayant un diamètre supérieur à 10 microns;
le système comportant en outre un premier isolant (316) disposé entre la première unité de conversion et la partie séparatrice, le premier isolant comportant des orifices ayant un diamètre inférieur à 10 microns; et
le système comportant en outre un second isolant (317) disposé entre la seconde unité de conversion et la partie séparatrice, le second isolant comportant des orifices ayant un diamètre inférieur à 10 microns
dans laquelle la partie séparatrice (311) se compose d'un matériau comportant au moins l'un des suivants PI**,** PET, PEN, de la fibre de verre, et du polymère cristal liquide.

2. Le système de la revendication 1, dans lequel un second composant électrique de l'un ou plusieurs des composants électriques recouvre au moins l'un des premier et second conducteurs.

3. Le système de la revendication 1, dans lequel le premier isolant (316) comporte une pluralité de couches ayant divers composants.

4. Le système de la revendication 1, dans lequel le premier isolant (316) est formé d'un matériau comportant un ou plusieurs matériaux polymères et un matériau céramique.

5. Le système de la revendication 4, dans lequel le matériau polymère comporte un ou plusieurs des éléments PVDF, PFDF-HFP, et PI.

6. Le système de la revendication 1 comportant en outre une unité d'emballage (234) configurée pour entourer la première unité de conversion, l'unité d'emballage étant électriquement couplée au premier conducteur et un élément conducteur étant disposé sur le substrat de circuit.

7. Le système de la revendication 6, comportant en outre une unité inerte (441) disposée entre la première unité de conversion et l'unité d'emballage, l'unité inerte étant électriquement non conductrice et inerte à la première unité de conversion.

8. Le système de la revendication 7, dans lequel l'unité inerte (441) utilise au moins une unité métallique oxydée et une unité métallique recouverte.

9. Le système de la revendication 1 comportant en outre une unité polymère (323) recouvrant le premier conducteur.

10. Le système de la revendication 9, dans lequel l'unité polymère (323) comporte au moins un ou plusieurs orifices traversant et une ou plusieurs parois intérieures à l'intérieur du ou des orifices traversant et recouvertes d'un matériau conducteur.

11. Le système de la revendication 1 dans lequel le substrat de circuit est une plaque de circuit flexible.

12. Un dispositif électronique (300) comprenant:
une première unité de conversion (322) configurée pour mettre en oeuvre une première conversion énergétique chimico-électrique;
un premier conducteur (321) électriquement couplé à la première unité de conversion électrique;
une seconde unité de conversion (332) configurée pour mettre en oeuvre une seconde conversion énergétique chimico-électrique;
un second conducteur (331) électriquement couplé à la première unité de conversion électrique; et
un substrat de circuit (314) comprenant une partie séparatrice (311) et une partie fonctionnelle, la partie séparatrice étant disposée entre la première unité de conversion et la seconde unité de conversion et configurée pour séparer la première unité de conversion de la seconde unité de conversion, la partie fonctionnelle incluant des circuits logiques et des composants;
dans lequel les circuits logiques et les composants sont disposés sur le substrat de circuit et configurés pour consommer une énergie électrique générée par au moins une parmi la première et la seconde unité de conversion;
dans lequel le premier conducteur et le second conducteur présentent des polarités différentes; la partie séparatrice (311) comporte des orifices (391a/b/c) ayant un diamètre supérieur à 10 microns;
le système comportant en outre un premier isolant (316) disposé entre la première unité de conversion et la partie séparatrice, le premier isolant comportant des orifices ayant un diamètre inférieur à 10 microns; et
le système comportant en outre un second isolant (317) disposé entre la seconde unité de conversion et la partie séparatrice, le second isolant comportant des orifices ayant un diamètre inférieur à 10 microns
dans laquelle la partie séparatrice (311) se compose d'un matériau comportant au moins l'un des suivants PI, PET, PEN, de la fibre de verre, et du polymère cristal liquide.

13. Le dispositif de la revendication 12, dans lequel un second composant électrique recouvre au moins un parmi le premier conducteur (321) et le second conducteur (331), le second composant électronique recevant son alimentation électrique d'au moins l'un parmi le premier et le second conducteur.

14. Le dispositif de la revendication 12 comportant en outre une unité d'emballage (234) configurée pour entourer la première unité de conversion, l'unité d'emballage étant électriquement couplée au premier conducteur et un élément conducteur étant disposé sur le substrat de circuit.

15. Le dispositif de la revendication 14 comportant en outre une unité inerte (441) disposée entre la première unité de conversion et l'unité d'emballage, l'unité inerte étant électriquement non conductrice et inerte au regard de la première unité de conversion.

16. Le dispositif électronique de la revendication 12 comportant en outre une unité polymère recouvrant le premier conducteur, dans lequel l'unité polymère comporte un ou plusieurs orifices de passage, et une ou plusieurs parois internes desdits orifices de passage sont recouvertes d'un matériau conducteur.
